# EUROPEAN PATENT APPLICATION

(11) **EP 4 818 755 A1**
(43) Date of publication of application: **07.10.2026**
(21) Application number: 23962583.3
(22) Date of filing: 26.12.2023
(51) Int. Cl.: G01S 17/931, G01S 13/931

(54) **DETECTION SYSTEM AND TERMINAL DEVICE**

(71) Applicant: Yinwang Intelligent Technologies Co., Ltd., Shenzhen, Guangdong 518110 (CN)
(72) Inventor: WANG, Yi, Shenzhen, Guangdong 518129 (CN); YU, Anliang, Shenzhen, Guangdong 518129 (CN); CHEN, Mo, Shenzhen, Guangdong 518129 (CN)
(74) Representative: Pfenning, Meinig & Partner mbB
(86) International application number: PCT/CN2023/142109
(87) International publication number: WO 2025/137889

(57) **Abstract**

A detection system and a terminal device that relate to the field of detection technologies are provided, to reduce power consumption of the detection system. The detection system includes at least one first detection apparatus and a second detection apparatus. The at least one first detection apparatus communicates with the second detection apparatus via a serializer/deserializer SerDes, and the second detection apparatus includes a centralized processing unit. The at least one first detection apparatus is configured to: detect at least one first field of view to obtain at least one first echo signal, and send the at least one first echo signal to the second detection apparatus via the SerDes. The second detection apparatus is configured to detect a second field of view to obtain a second echo signal, and the centralized processing unit recognizes a target based on the first echo signal and the second echo signal. Communication between the at least one first detection apparatus and the second detection apparatus is implemented via the SerDes, so that a communication loss can be reduced, and power consumption of the detection system can be reduced. In addition, the centralized processing unit is disposed in the second detection apparatus to process the echo signals together, power consumption can be further reduced, and costs can be reduced.

## Description

### TECHNICAL FIELD

This application relates to the field of detection technologies, and in particular, to a detection system and a terminal device.

### BACKGROUND

With development of science and technology, smart terminals such as smart transportation devices, smart home devices, industrial devices, robots, and vehicles are gradually introduced into people's daily life. A detection apparatus can sense an ambient environment, can recognize and track a moving target based on the sensed environment, and can perform path planning and the like based on a navigator, map data, and the like. Therefore, the detection apparatus is gradually used in the smart terminals, and plays an increasingly important role.

Based on different application requirements of the smart terminals, there are also different requirements for a layout of the detection apparatus currently. A traditional smart terminal uses an architecture of a single detection apparatus. Although a target within a specific range can be recognized, a recognition range is limited, and phenomena such as false alarms and missed detection are likely to occur. To resolve the technical problem, an architecture of a distributed detection system is proposed. The distributed detection system means that the detection system has two or more detection apparatuses, each detection apparatus has its own recognition range, and recognition ranges of a plurality of detection apparatuses are combined, to ensure multi-directional visibility of a smart terminal to surrounding targets. However, mainstream distributed detection systems currently suffer from high power consumption. In particular, when different detection apparatuses are far away from each other, excessively high power needs to be provided to complete data transmission, which poses a challenge to achieving a low-power design of the detection system.

In conclusion, how to reduce the power consumption of the distributed detection system is a technical problem that urgently needs to be resolved.

### SUMMARY

This application provides a detection system and a terminal device, to reduce power consumption of the detection system (for example, a distributed detection system).

According to a first aspect, this application provides a detection system, including at least one first detection apparatus and a second detection apparatus. The at least one first detection apparatus communicates with the second detection apparatus via a serializer/deserializer (serializer/deserializer, SerDes), and the second detection apparatus includes a centralized processing unit. The at least one first detection apparatus is configured to: detect at least one first field of view to obtain at least one first echo signal, and send the at least one first echo signal to the second detection apparatus via the SerDes. The second detection apparatus is configured to detect a second field of view to obtain a second echo signal, and the centralized processing unit recognizes a target based on the first echo signal and the second echo signal.

In the foregoing solution, communication between the at least one first detection apparatus and the second detection apparatus is implemented via the SerDes, so that performance of high-speed SerDes serial transmission and low-loss SerDes transmission can be used to improve a speed of transmitting the echo signal from the at least one first detection apparatus to the second detection apparatus, and reduce a transmission loss of the echo signal, thereby reducing power consumption of the detection system. In addition, the centralized processing unit is integrated in the second detection apparatus to process the echo signals of the at least one first detection apparatus and the second detection apparatus together. In this way, it is unnecessary to dispose processing units in all detection apparatuses, or connect an external processing unit through an optical fiber. This can further reduce the power consumption and costs.

In a possible design, any first detection apparatus or the second detection apparatus may be mounted at any one of the following positions: a vehicle top, a vehicle front, a vehicle rear, a position near a vehicle lamp, a position near a vehicle door, a position near a side mirror, a position near a vehicle wheel, a front bumper, a rear bumper, a position inside a windshield, or the like. For example, the second detection apparatus is disposed at the vehicle top, and the at least one first detection apparatus is disposed near the vehicle lamp; or the second detection apparatus is disposed on the front bumper, and the at least one first detection apparatus is disposed below the side mirror.

Based on the foregoing design, the at least one first detection apparatus and the second detection apparatus may be mounted at a position that meets a requirement of an actual scenario, to improve flexibility and universality of the detection system.

In a possible design, the second detection apparatus may be disposed at a position on the vehicle roof and near the windshield, the detection system includes two first detection apparatuses, one first detection apparatus is disposed between a left front vehicle lamp and a left vehicle wheel, and the other first detection apparatus is disposed between a right front vehicle lamp and a right vehicle wheel.

Based on the foregoing design, the two first detection apparatuses may be configured to detect targets on left and right sides of a vehicle, and the second detection apparatus may be configured to detect a target in front of the vehicle. The two first detection apparatuses are combined with the second detection apparatus, and a minimum quantity of detection apparatuses can be used to implement multi-directional detection around the vehicle.

In a possible design, a serializer is disposed in the first detection apparatus, at least one deserializer is disposed in the at least one second detection apparatus, and the serializer is connected to the at least one deserializer through a coaxial cable or a shielded twisted pair cable.

Based on the foregoing design, the serializer, the deserializer, the coaxial cable, or the shielded twisted pair cable may form a high-speed serial link, so that data can be transmitted at a high speed between two detection apparatuses in a form of a serial signal, thereby reducing transmission time. In addition, the coaxial cable or the shielded twisted pair cable consists of a central copper wire, a plastic insulator, a conductive mesh layer, and a wire sheath from the inside to the outside. When an echo signal is transmitted, the echo signal sent by the central copper wire is isolated by the conductive mesh layer. Therefore, the echo signal is not widely scattered to the outside of the cable. In this way, intensity attenuation of the echo signal in a transmission process can be reduced, and a transmission loss of the echo signal can be reduced, thereby effectively reducing transmission power consumption of the detection system.

In a possible design, the SerDes may be a gigabit multimedia serial link (gigabit multimedia serial link, GMSL).

Based on the foregoing design, the GMSL has advantages such as a high transmission rate, a long transmission distance, and strong anti-interference, and can improve transmission performance of the detection system.

In a possible design, the second detection apparatus may send at least one of the following information items to any first detection apparatus via the SerDes: configuration information, used to configure at least one of the following information items of the first detection apparatus: an emission manner, an emission time, a detection manner, or a detection time; synchronization information, indicating frame synchronization or slot synchronization between the first detection apparatus and the second detection apparatus; and clock information, used to maintain time consistency between the first detection apparatus and the second detection apparatus.

Based on the foregoing design, the configuration information, the synchronization information, or the clock information may be transmitted between the two detection apparatuses via a same SerDes link. In other words, an interface of the SerDes link may be divided, and different data is transmitted via the same SerDes link, to reduce costs of the detection system.

In a possible design, the second detection apparatus is further configured to supply power to the at least one first detection apparatus via the SerDes.

Based on the foregoing design, the SerDes link may also be used to supply power. In this way, only one power supply may be disposed in the second detection apparatus, and it is unnecessary to dispose power supplies in all detection apparatuses, thereby further reducing the costs and a size of the detection system.

In a possible design, a detection distance range of the at least one first detection apparatus is different from a detection distance range of the second detection apparatus.

Based on the foregoing design, the at least one first detection apparatus and the second detection apparatus are combined to detect targets in at least two distance ranges. A detection apparatus with a long detection distance range may be configured to perform range detection, and a detection apparatus with a short detection distance range may be configured to perform blind spot coverage. In this way, short-distance blind spot coverage can be performed during range detection.

In a possible design, a wavelength of the at least one first detection apparatus is different from a wavelength of the second detection apparatus.

Based on the foregoing design, the echo signals of the at least one first detection apparatus and the second detection apparatus can be more easily distinguished based on the wavelengths. This helps reduce a probability of signal crosstalk.

In a possible design, a field of view range of the at least one first detection apparatus is different from a field of view range of the second detection apparatus.

Based on the foregoing design, the at least one first detection apparatus and the second detection apparatus can be separately configured to detect targets in different directions, so that comprehensive multi-directional detection can be performed on the targets.

In a possible design, when the second detection apparatus is a long-range radar, the at least one first detection apparatus may be a medium-range radar or a short-range radar; or when the second detection apparatus is a medium-range radar, the at least one first detection apparatus may be a long-range radar or a short-range radar; or when the second detection apparatus is a short-range radar, the at least one first detection apparatus may be a long-range radar or a medium-range radar.

Based on the foregoing design, the at least one first detection apparatus and the second detection apparatus have different radar types. In this way, a probability of crosstalk of cooperative operating between the at least one first detection apparatus and the second detection apparatus can be reduced.

In a possible design, the centralized processing unit is further configured to generate point cloud data.

Based on the foregoing design, point cloud construction, for example, three-dimensional point cloud construction, can be implemented.

In a possible design, the second detection apparatus may communicate with a domain controller through an Ethernet.

Based on the foregoing design, after processing the echo signals of the at least one first detection apparatus and the second detection apparatus together, the second detection apparatus can send a processing result to the domain controller through the Ethernet, so that the domain controller can determine a subsequent operating manner based on the processing result.

In a possible design, the second detection apparatus sends a detection signal in each slot, and a plurality of first detection apparatuses send detection signals in different slots.

Based on the foregoing design, the plurality of first detection apparatuses send the detection signals in the different slots, so that the detection signals of the plurality of first detection apparatuses are separated in terms of time (also referred to as time division separation). In this way, even if the plurality of first detection apparatuses have a same wavelength, only one first detection apparatus sends a detection signal within one slot, and the plurality of first detection apparatuses do not simultaneously send the detection signals, thereby avoiding crosstalk between the detection signals sent by the different first detection apparatuses. In addition, because the second detection apparatus performs emitting and detection in each slot, the second detection apparatus and one first detection apparatus perform emitting and detection within one slot simultaneously, the detection signal sent by the second detection apparatus and a detection signal sent by the first detection apparatus have different wavelengths, and a probability of mutual interference is low. Therefore, a detection result of the second detection apparatus may be used as a reference for comparison with a detection result of the first detection apparatus that performs emitting in each slot, to jointly filter out noise in an overlapping area between the second detection apparatus and the first detection apparatus that performs emitting in each slot.

In a possible design, within one slot, the second detection apparatus and the first detection apparatus that sends the detection signal send same quantities of detection signals, and a time at which the first detection apparatus sends the detection signal is later than a time at which the second detection apparatus sends the detection signal.

Based on the foregoing design, compared with the second detection apparatus, the first detection apparatus delays emitting in a same slot. Therefore, return time of the first echo signal corresponding to the first detection apparatus and return time of the second echo signal corresponding to the second detection apparatus can be staggered, so that both the first detection apparatus and the second detection apparatus can receive their own echo signals in their own corresponding time, to reduce crosstalk between the first detection apparatus and the second detection apparatus that operate simultaneously in the same slot.

In a possible design, the at least one first field of view and the second field of view at least partially overlap.

Based on the foregoing design, a target in the overlapping area may be simultaneously detected by the at least one first detection apparatus and the second detection apparatus, and the target can be recognized more accurately based on detection results of the at least one first detection apparatus and the second detection apparatus for the same target.

In a possible design, before recognizing the target, the second detection apparatus may further delete an interference signal in the at least one first echo signal and the second echo signal based on an echo signal that is in the at least one first echo signal and the second echo signal and that corresponds to the overlapping area.

Based on the foregoing design, the first echo signal and the second echo signal that correspond to the overlapping area can be combined to remove the noise, thereby suppressing interference.

In a further possible design, the centralized processing unit is specifically configured to: for any first echo signal, determine a target position of the first echo signal; and when the target position is located in an overlapping area between the second field of view and the first field of view corresponding to the first echo signal, and a plurality of second echo signals include a second echo signal that has a same target position and same reflectivity as the first echo signal, determine the first echo signal as a non-interference signal.

Based on the foregoing design, the first echo signal corresponding to the target can be quickly located based on whether the first echo signal and the second echo signal are echo signals reflected by the same target in the overlapping area, to improve interference suppression efficiency.

In a further possible design, the centralized processing unit is further configured to: if the second echo signal that has the same target position and the same reflectivity as the first echo signal does not exist in the plurality of second echo signals, but a suspected interference signal that has the same target position and same reflection intensity as the first echo signal exists in suspected interference signals of the plurality of second echo signals, determine the first echo signal as the interference signal. The suspected interference signal of the plurality of second echo signals is a second echo signal that is in the plurality of second echo signals and that has a different target position or different reflectivity from the first echo signal.

Based on the foregoing design, the first echo signal corresponding to the noise can be accurately located based on an association relationship between target positions and reflection intensity of a suspected interference first echo signal and a suspected interference second echo signal, to filter out the noise.

In a further possible design, the centralized processing unit is further configured to: if the suspected interference signal that has the same target position and the same reflection intensity as the first echo signal does not exist in the suspected interference signals of the plurality of second echo signals, but the first echo signal is spatially continuous with first echo signals in adjacent slots in a same frame of detection, and the first echo signal is temporally continuous with first echo signals in same slots in different frames of detection, determine the first echo signal as the non-interference signal; otherwise, determine the first echo signal as the interference signal.

Based on the foregoing design, whether the first echo signal is an echo signal corresponding to the detection signal sent by the first detection apparatus can be determined based on time and space continuity of the first echo signal and the adjacent first echo signals or the other first echo signals in the same slot, so that whether the first echo signal is the non-interference signal can be further accurately determined.

According to a second aspect, this application provides a terminal device, including the detection system according to any one of the first aspect or the designs of the first aspect.

For technical effect that can be achieved in the second aspect, refer to descriptions of beneficial effect in the first aspect. Details are not described herein one by one again.

### BRIEF DESCRIPTION OF DRAWINGS

FIG. 1a is an example of a diagram of a horizontal field of view;
FIG. 1b is an example of a diagram of a vertical field of view;
FIG. 1c is an example of a time sequence diagram of association between a frame, a slot, and a shot;
FIG. 2 is an example of a diagram of a possible application scenario according to this application;
FIG. 3a is an example of a diagram of an architecture of a distributed detection system according to the industry;
FIG. 3b is an example of a diagram of an architecture of another distributed detection system according to the industry;
FIG. 3c is an example of a diagram of an architecture of still another distributed detection system according to the industry;
FIG. 4 is an example of a diagram of an architecture of a detection system according to this application;
FIG. 5 is an example of a diagram of an architecture of SerDes communication according to this application;
FIG. 6 is an example of a schematic of an interface circuit of a SerDes according to this application;
FIG. 7a is an example of a diagram of possible mounting positions of detection apparatuses according to this application;
FIG. 7b is an example of another diagram of possible mounting positions of detection apparatuses according to this application;
FIG. 7c is an example of still another diagram of possible mounting positions of detection apparatuses according to this application;
FIG. 8 is an example of a partial exploded view of a terminal device according to this application;
FIG. 9a is an example of a diagram of an overlapping relationship between fields of view of detection apparatuses according to this application;
FIG. 9b is an example of another diagram of an overlapping relationship between fields of view of detection apparatuses according to this application;
FIG. 10 is an example of an interaction flowchart of joint detection according to this application;
FIG. 11 is an example of a diagram of emission timing of detection apparatuses according to this application;
FIG. 12 is an example of a diagram of emission timing of a first detection apparatus and a second detection apparatus within one slot according to this application; and
FIG. 13 is an example of a flowchart of determining an interference signal according to this application.

### DESCRIPTION OF EMBODIMENTS

The following describes in detail embodiments of this application with reference to accompanying drawings.

Some terms in this application are described below. It should be noted that these explanations are for ease of understanding by a person skilled in the art, and are not intended to limit the protection scope claimed by this application.

### 1. SerDes

The SerDes uses a time division multiplexing (time division multiplexing, TDM) and peer-to-peer (peer-to-peer, P2P) serial communication technology. The SerDes may convert a plurality of low-speed parallel signals into high-speed serial signals at a transmit end, transmit the high-speed serial signals to a receive end via a transmission medium (for example, a cable), and finally convert the high-speed serial signals into the low-speed parallel signals at the receive end. The SerDes fully uses a channel capacity of the transmission medium, reduces quantities of required transmission channels and component pins, and improves a signal transmission speed, thereby greatly reducing communication costs.

### 2. Field of view (field of view, FOV)

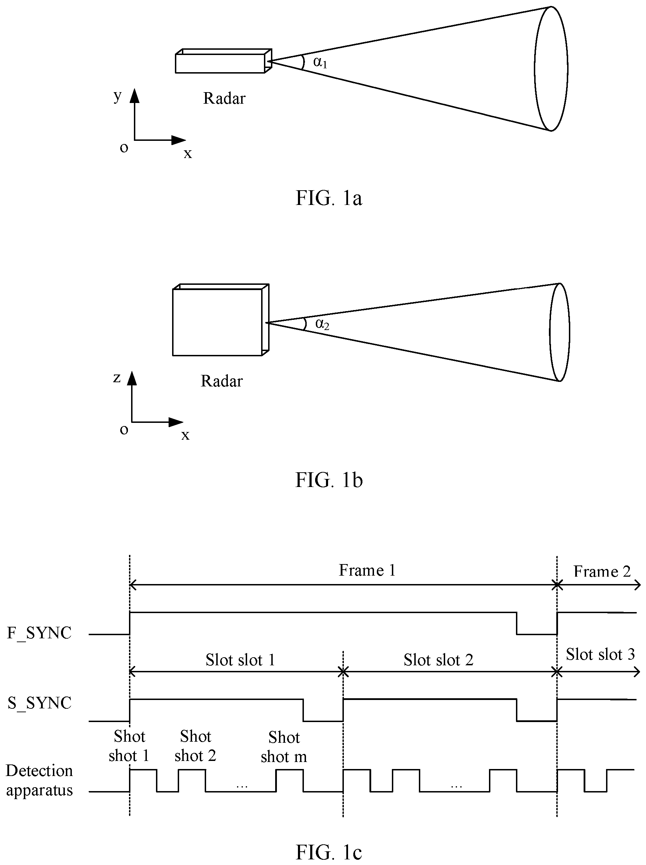

The field of view may also be referred to as a view, and is a visual range of an object that can be observed by a visual system. In brief, the field of view may be understood as coverage of a detection signal, sent by a radar, in a detection area. The field of view may be generally identified by a field of view, and the field of view may be classified into a horizontal field of view and a vertical field of view. The horizontal field of view is an angle range that can be observed by the radar in a horizontal direction. Refer to α₁ shown in FIG. 1a. An xoy plane shown in the figure is a horizontal plane. The vertical field of view is an angle range that can be observed by the radar in a vertical direction. Refer to α₂ shown in FIG. 1b. A yoz plane shown in the figure is a vertical plane, and the vertical plane is a plane that passes through an optical axis and is perpendicular to the horizontal plane.

### 3. Slot (slot)

The slot is short for a beam position or a beam center position. A radar usually needs a plurality of slots for one frame of detection in detection space. A quantity of slots is related to an angle range of one scan of a scanning component. For example, a pitch range of the radar is from 0° to 20°, and an angle range of each scan of the scanning component is 5°. In this case, the scanning component needs to rotate at least four times to cover the entire pitch range, in other words, 4 slots are required. A laser sends a plurality of laser signals within each slot to detect a region corresponding to the current slot. After detection is completed, a next slot is switched to by changing a scanning angle by the scanning component, and the laser sends a plurality of laser signals again to detect a region corresponding to the next slot. The process is repeated until detection on an entire detection region is completed.

It may be understood that because a plurality of detection signals are sent within one slot, the slot may be further divided into a plurality of shots, and 1 shot corresponds to one detection signal. For example, refer to FIG. 1c. A time sequence diagram of association between a frame, a slot, and a shot is shown. In the figure, F_SYNC refers to an enabling time sequence in a unit of a frame. In detection duration of one frame, F_SYNC may be enabled for an extended period first, and then disabled until an end of the frame. In comparison with F_SYNC, S_SYNC refers to an enabling time sequence in a unit of a slot. In a time period in which F_SYNC is enabled in each frame, S_SYNC is enabled for a plurality of times, and duration of enabling for one time may correspond to detection of 1 slot. For example, in the figure, one frame corresponds to 2 slots (that is, a slot 1 and a slot 2). Each time the scanning component rotates to a slot, S_SYNC is enabled for a period of time to receive and sense an echo signal in the slot. Then, S_SYNC is disabled. After the scanning component rotates to another slot, S_SYNC is enabled again to complete detection of the current slot. In a time period in which S_SYNC is enabled in each slot, the detection apparatus is enabled for a plurality of times in the unit of a shot, and duration of enabling for one time may correspond to transmission of one detection signal. For example, as shown in the figure, 1 slot corresponds to m shots (that is, a shot 1, a shot 2, ..., and a shot m, where m is a positive integer). It is assumed that the detection signal is a laser beam, the detection apparatus may first emit one laser beam in each slot, wait for a period of time, then emit a next laser beam until m laser beams are emitted, and end detection on the current slot.

### 4. Frame synchronization and slot synchronization

Frame synchronization means that a plurality of detection apparatuses are enabled in a same frame. It may be understood that the plurality of detection apparatuses send detection signals in the same frame, and obtain echo signals. Similarly, slot synchronization means that a plurality of detection apparatuses are enabled in a same slot. It may be understood that the plurality of detection apparatuses send detection signals in the same slot, and obtain echo signals.

The foregoing describes some terms used in this application, and the following describes possible application scenarios of this application.

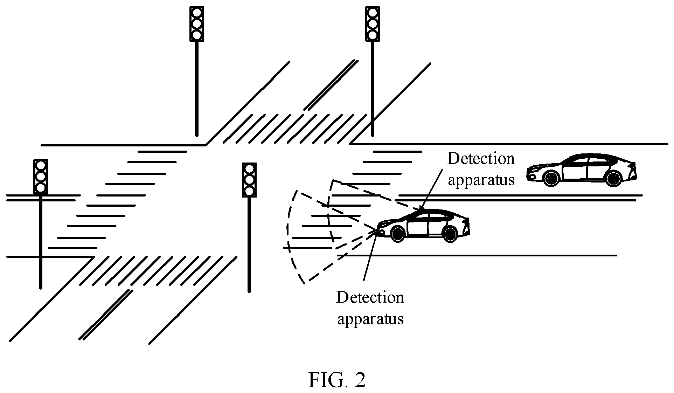

In a possible implementation, a detection system provided in this application may be integrated into a vehicle. The detection system may be a distributed detection system, for example, may include at least two detection apparatuses, and the detection apparatus may include but is not limited to a lidar. FIG. 2 is an example of a diagram of a possible application scenario of this application. In the application scenario, an example in which a detection system includes two detection apparatuses and the two detection apparatuses are respectively mounted at a front bumper of a vehicle and at a roof of a vehicle is used. It may be understood that two or more detection apparatuses of any quantity may be mounted on a vehicle, and any detection apparatus may be mounted at any position of the vehicle, for example, around a vehicle lamp, around a side mirror, near a vehicle door, at the front bumper, at a rear bumper, behind a windshield, or on the roof, to capture ambient environment information of the vehicle. When the detection apparatus is mounted behind the windshield, the detection apparatus has a lower requirement for resistance to gravel impact, and does not affect an aesthetic appearance of the vehicle. In addition, a front windshield has a window heating and defogging function and a wiper cleaning function.

For example, the detection system is installed in the vehicle. Refer to FIG. 2. An operating principle of the detection system is as follows: At least two detection apparatuses transmit detection signals to respective detection areas. If targets exist in the detection areas, the targets may reflect received beams (also referred to as echo signals) back to the detection apparatuses, and the detection system jointly determines association information of the targets based on the echo signals of the at least two detection apparatuses. Specifically, the detection system may obtain, in real time or periodically based on the echo signals of the at least two detection apparatuses, longitude and latitude, a speed, and an orientation of the vehicle, or information (such as a distance from a target, a speed of the target, and/or a posture of the target) associated with the target (such as another surrounding vehicle, a pedestrian, or an obstacle) in a specific range. Further, optionally, the detection system may further send the obtained information to a control unit or the like in the vehicle, for the control apparatus to perform path planning, braking, starting, or the like for the vehicle based on the obtained information. For example, a position of the vehicle may be determined based on the longitude and the latitude, or a traveling direction and a destination of the vehicle in a future period of time may be determined based on the speed and the orientation, or a quantity and density of obstacles around the vehicle may be determined based on distances from surrounding objects. Further, optionally, assisted driving, autonomous driving, or the like of the vehicle may be further implemented in combination with a function of an advanced driver assistance system (advanced driver assistance system, ADAS).

It should be understood that the foregoing application scenario is merely an example. The detection system provided in this application may alternatively be used in another possible scenario, and is not limited to the scenario in the foregoing example. For example, the detection system may also be mounted on a road side unit (road side unit, RSU) to serve as a road-side traffic detection system, to implement intelligent vehicle-road collaborative communication and the like. In another example, the detection system may also be used in another transportation means to serve as an information collection source for path planning, to assist a driver in implementing safe driving or to automatically implement safe driving. The another transportation means may include but is not limited to a ship, an airplane, an unmanned aerial vehicle, a train, a subway, an automated guided vehicle (automated guided vehicle, AGV), or an unmanned transport vehicle. In still another example, the detection system may also be used in a terminal device or a component disposed in the terminal device. The terminal device may be, for example, a smartphone, a smart home device, a smart manufacturing device, a medical device, an industrial device, or a robot. Examples are not enumerated herein. It should be noted that the application scenarios described in this application are intended to describe the technical solutions in this application more clearly, and do not constitute a limitation on the technical solutions provided in this application.

In addition, the foregoing application scenarios may be applied to fields such as self-driving, assisted driving, intelligent driving, autonomous driving, a connected vehicle, optical communication, security surveillance, biomedicine, surveying and mapping (for example, three-dimensional drawing and remote sensing and mapping), meteorological research, biomass and vegetation research, air quality monitoring, and aviation and aerospace applications.

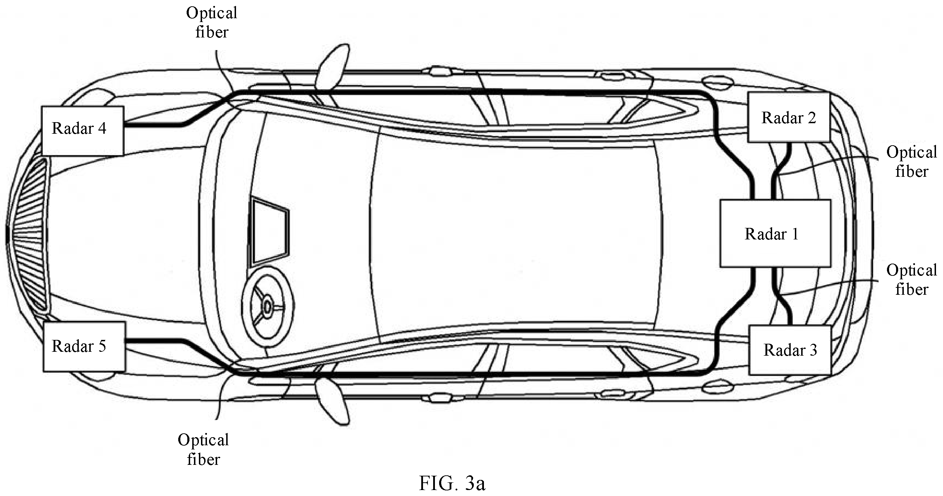

As described in the background, power consumption of an existing detection system is high because the existing detection system uses optical fibers to connect detection apparatuses. For example, refer to FIG. 3a. To implement full-surround detection of a vehicle, in the existing detection system, a plurality of radars may be mounted at a vehicle front and a vehicle rear of the vehicle, optical fibers are routed inside a vehicle body, and a radar at the vehicle front is connected to a radar at the vehicle rear through the optical fibers. In this way, during full-surround detection, a radar 1 at the vehicle rear may send detection-related information to other radars 2 to 5 through the optical fibers, to indicate the radars 2 to 5 to implement joint detection with the radar 1. However, because the optical fibers are laid across the entire vehicle based on this architecture design, and consequently, data transmitted in the optical fibers increases as a transmission distance increases. Therefore, to transmit the information of the radar 1 at the vehicle rear to the radars 4 and 5 at the vehicle front through such long optical fibers, significantly higher power needs to be provided for information transmission, which greatly increases power consumption of the detection system.

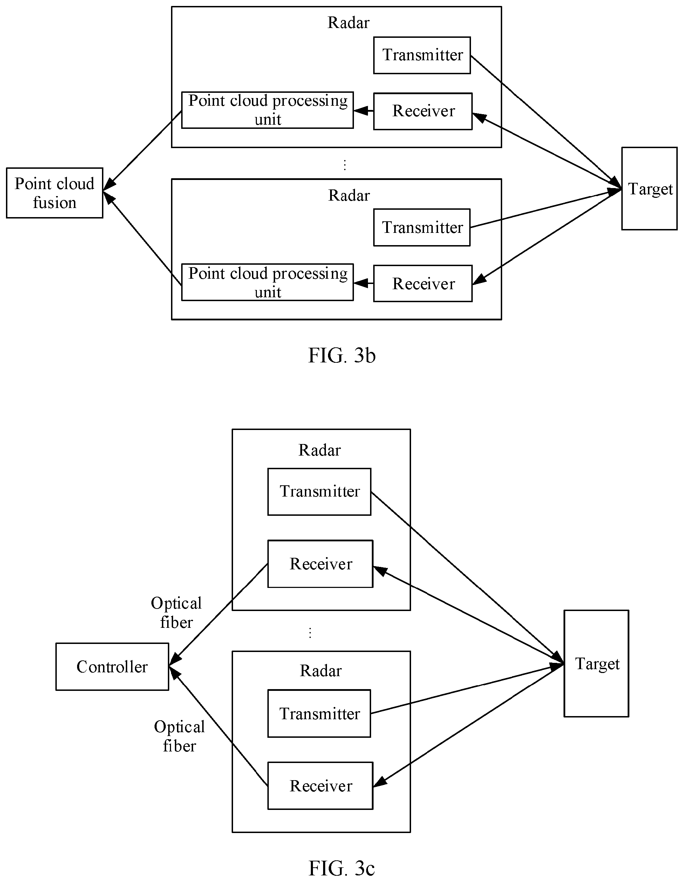

For the foregoing technical problem, the industry proposes some solutions. For example, refer to FIG. 3b. In a solution, radars are independently deployed in a vehicle, and a point cloud processing unit is disposed in each radar. An echo signal collected by each radar is first processed by the local point cloud processing unit to generate point cloud data, and then point cloud fusion is performed based on point cloud data of another radar, to recognize a target. In this solution, although the radars do not need to be connected through optical fibers, the point cloud processing unit needs to be separately disposed in each radar. Consequently, power consumption of an entire detection system is still high, and presence of a plurality of point cloud processing units correspondingly increases costs of the detection system. For another example, refer to FIG. 3c. In another solution, although a point cloud processing unit does not need to be separately disposed in each radar, a controller needs to be disposed outside each radar, and a receiver of each radar is connected to the controller through an optical fiber. In this way, when a target is detected, an echo signal collected by each radar may be first sent to the controller through the optical fiber, and then the controller combines echo signals of radars to generate point cloud data, to recognize the target. However, using the independent controller leads to high costs of a detection system. In addition, because the controller is connected to each radar through the optical fiber, power consumption is still high. In conclusion, neither of the two solutions provided in the industry can effectively reduce the power consumption, and instead, the costs are increased.

In view of this, this application provides a detection system. In the detection system, communication between different detection apparatuses is implemented via a SerDes, and a centralized processing unit is integrated into one detection apparatus. In this way, power consumption of transmitting an echo signal between different detection apparatuses can be reduced based on a feature of low-power transmission of the SerDes, and it is unnecessary to dispose a point cloud processing unit in each detection apparatus or introduce an additional controller and optical fiber, thereby further reducing power consumption and reducing system costs.

The following specifically describes the detection system provided in this application with reference to specific accompanying drawings.

In embodiments of this application, unless otherwise stated or there is a logic conflict, terms and/or description between different embodiments are/is consistent and may be mutually referenced, and technical features in different embodiments may be combined based on an internal logical relationship thereof, to form a new embodiment.

In addition, in this application, "position" does not mean an absolute position, and allows an engineering tolerance. "Reflectivity" does not mean absolute reflectivity, and allows an engineering tolerance. "Reflection intensity" does not mean absolute reflection intensity, and allows an engineering tolerance. A form of a time sequence diagram does not mean an absolute form, provided that the time sequence diagram has a same rising, stable, or falling trend. For example, a rising edge (or a falling edge) may be vertically rising (or falling), or may be rising (or falling) in a stepped manner, or may have a specific slope, or may have a specific arc, or the like.

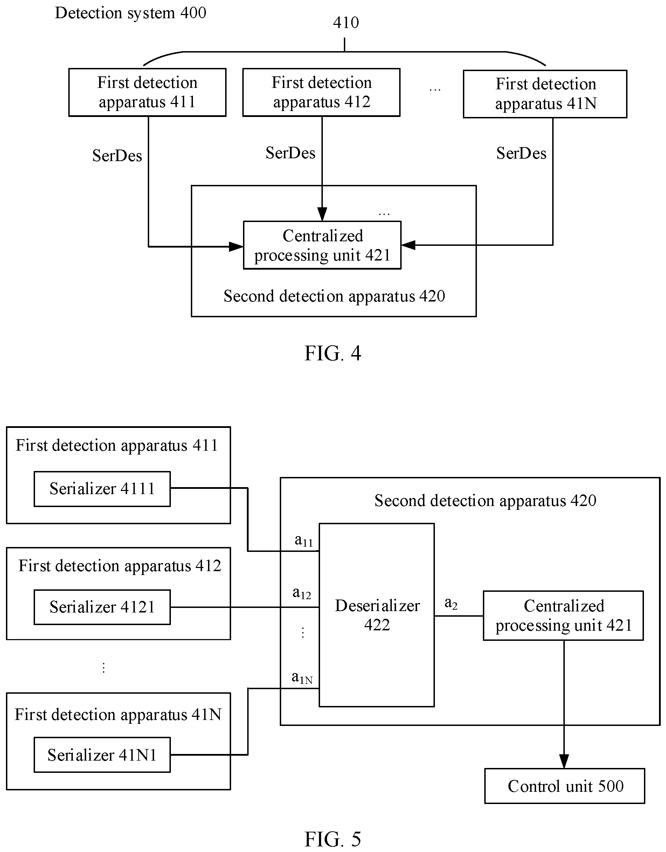

FIG. 4 is a diagram of an architecture of a detection system according to this application. As shown in FIG. 4, the detection system 400 includes a second detection apparatus 420 and at least one first detection apparatus 410, for example, a first detection apparatus 411, a first detection apparatus 412, ..., and a first detection apparatus 41N, where N is a positive integer. The at least one first detection apparatus 410 communicates with the second detection apparatus 420 via a serializer/deserializer SerDes, and the second detection apparatus 420 includes a centralized processing unit 421. When the detection system 400 operates, the at least one first detection apparatus 410 is configured to: detect at least one first field of view to obtain at least one first echo signal, and send the at least one first echo signal to the second detection apparatus 420 via the SerDes. The second detection apparatus 420 is configured to detect a second field of view to obtain a second echo signal, and the centralized processing unit 421 recognizes a target based on the first echo signal and the second echo signal.

It may be understood that, because the echo signals are processed in the second detection apparatus 420 together, the second detection apparatus 420 may also be referred to as a central detection unit, and the at least one first detection apparatus 410 may also be referred to as a remote detection unit. The central detection unit and the remote detection unit form a distributed detection system architecture. The distributed detection system architecture can perform comprehensive multi-directional detection on targets, thereby reducing probabilities of a false alarm and missed detection.

Optionally, that the at least one first detection apparatus 410 communicates with the second detection apparatus 420 via the SerDes may be understood as that the at least one first detection apparatus 410 is connected to the second detection apparatus 420 through a high-speed serial link. The high-speed serial link includes a serializer, a deserializer, a transmission medium, and the like. For example, FIG. 5 is a diagram of an architecture of SerDes communication according to this application. In this example, N serializers 4111, 4121, ..., and 41N1 that one-to-one correspond to the N first detection apparatuses 411, 412, ..., and 41N are disposed, a deserializer 422 is disposed in the second detection apparatus 420, and the N serializers 4111 to 41N1 and the deserializer 422 are connected via coaxial cables, shielded twisted pair (shielded twisted pair, STP) cables, or other types of transmission media. When the detection system 400 operates, the N serializers 4111 to 41N1 may encapsulate first echo signals of the N first detection apparatuses 411 to 41N into high-speed serial signals, and may transmit the high-speed serial signals to the deserializer 422 through the coaxial cables, the STP cables, or the like. The deserializer 422 may obtain the first echo signals of the N first detection apparatuses 411 to 41N by parsing the high-speed serial signals. When this design architecture is used, the coaxial cable or the STP cable consists of a central copper wire, a plastic insulator, a conductive mesh layer, and a wire sheath from the inside to the outside. When an echo signal is transmitted, the echo signal sent by the central copper wire is isolated by the conductive mesh layer. Therefore, the echo signal is not widely scattered to the outside of the cable. In this way, intensity attenuation of the echo signal in a transmission process can be reduced, and a transmission loss of the echo signal can be reduced, thereby effectively reducing transmission power consumption of the detection system.

Further, optionally, refer to FIG. 5. N first interfaces a₁₁, a₁₂, ..., and a_{1N} may be disposed on the deserializer 422, and the N serializers 4111 to 41N1 are connected to the N first interfaces a₁₁ to a_{1N} in a one-to-one correspondence via transmission media. When the detection system 400 operates, the serializer in each first detection apparatus may transmit the high-speed serial signal obtained through encapsulation to the corresponding first interface on the deserializer 422. After receiving the high-speed serial signal, the deserializer 422 may learn, by determining the first interface for input, the first detection apparatus to which the high-speed serial signal belongs, and then parse the high-speed serial signal to obtain the first echo signal of the first detection apparatus.

Further, optionally, refer to FIG. 5. A second interface a₂ may be further disposed on the deserializer 422, and the second interface a₂ is connected to the centralized processing unit 421 through a local trace in the second detection apparatus 420. When the detection system 400 operates, each time the deserializer 422 obtains a high-speed serial signal through parsing, the deserializer 422 may transmit, to the centralized processing unit 421 through the second interface a₂, the first echo signal obtained through parsing. The centralized processing unit 421 may store the input first echo signal, and may perform target recognition based on a plurality of stored first echo signals after a period of time. For example, the centralized processing unit 421 may generate point cloud data based on the plurality of first echo signals, and may perform recognition to obtain related information of the target based on the point cloud data, which for example, may include but is not limited to a position, a size, a speed, and a posture of the target.

Further, optionally, refer to FIG. 5. The centralized processing unit 421 may be further connected to a control unit 500, for example, may be connected to the control unit 500 through an Ethernet. The control unit 500 may be understood as a domain controller in a device in which the detection system 400 is located. For example, when the detection system 400 is integrated into a vehicle, the control unit 500 may be a mobile data center (mobile data center, MDC) (also referred to as an intelligent driving computing platform), a vehicle control unit (vehicle control unit, VCU), a vehicle domain controller (vehicle domain controller, VDC), or another device having a control function. When the detection system 400 operates, the centralized processing unit 421 may send the point cloud data and the related information, of the target, obtained through recognition to the control unit 500, so that the control unit 500 determines a subsequent operating manner, for example, determines a traveling direction and a destination of the vehicle in a future period of time, to implement assisted driving or autonomous driving of the vehicle.

Optionally, the SerDes may be any interface circuit that can implement high-speed serial data transmission, for example, may be a gigabit multimedia serial link (gigabit multimedia serial link, GMSL), a serial rapid input/output (serial rapid input/output, SRIO) interface, a peripheral component interconnect express (peripheral component interconnect express, PCIE) interface, or a serial advanced technology attachment (serial advanced technology attachment, SATA) interface. When the SerDes is implemented using a GMSL interface, the detection system has advantages such as a high transmission rate, a long transmission distance, and strong anti-interference. For example, currently, a communication protocol based on the GMSL interface can already implement a single-channel data transmission rate of 12 Gbps, and a data transmission distance may reach 15 m or longer via a 50 Ω coaxial cable or a 100 Ω shielded twisted pair cable, which greatly increases a data transmission distance.

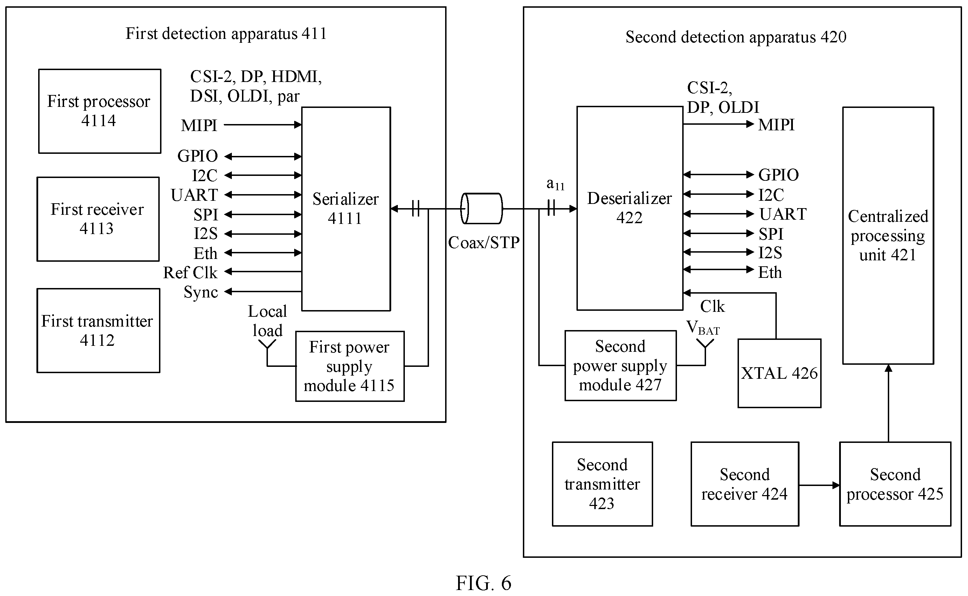

An example in which the SerDes is the GMSL is used. FIG. 6 is an example of a schematic of an interface circuit of a SerDes according to this application. In the figure, the first detection apparatus 411 and the second detection apparatus 420 are used as an example. For an interface circuit of another first detection apparatus, refer to the following description of the first detection apparatus 411. Details are not described herein one by one.

An interface circuit and another internal component in the first detection apparatus 411 are first described.

Optionally, refer to FIG. 6. In addition to the serializer 4111, the first detection apparatus 411 may further include one or more of a first transmitter 4112, a first receiver 4113, and a first processor 4114. The first transmitter 4112 may be configured to emit a first detection signal to a first field of view corresponding to the first detection apparatus 411, for example, emit a plurality of laser beams. The first receiver 4113 may be configured to receive a first echo signal reflected by a target in the first field of view, and may send the first echo signal to the first processor 4114. The first processor 4114 does not have a point cloud processing capability, but can perform single-transmit anti-interference screening on received first echo signals, for example, may select, from the received plurality of first echo signals, a first echo signal with maximum light intensity, a first echo signal with shortest return time, and a first echo signal with maximum power. Then, the first processor 4114 may perform feature analysis on these first echo signals, to extract some features related to a point cloud from these first echo signals, and may send these features to the serializer 4111. The extracted feature may include, for example, but is not limited to, a rising edge position, a falling edge position, a wave peak position, a wave trough position, a pulse width, energy, and a quantity of wave peaks or a quantity of wave troughs.

Further, optionally, refer to FIG. 6. The serializer 4111 may have a plurality of interfaces, for example, a mobile industry processor interface (mobile industry processor interface, MIPI), a general-purpose input/output (general-purpose input/output, GPIO) interface, an inter-integrated circuit (inter-integrated circuit, I2C) bus interface, a universal asynchronous receiver/transmitter (universal asynchronous receiver/transmitter, UART) interface, a serial peripheral interface (serial peripheral interface, SPI), an inter-integrated circuit sound (inter-integrated circuit sound, I2S) bus interface, an Ethernet (ethernet, Eth) interface, a reference clock (reference clock, Ref Clk) interface, and a synchronizer (synchronizer, Sync) interface. The following describes these interfaces in detail.

The MIPI is a data interface and is a unidirectional receive interface. The serializer 4111 may receive, through the MIPI, service data (also referred to as MIPI data) sent by another component in the first detection apparatus 411, may pack the service data into serial data, and send the serial data to the deserializer 422 through a coaxial cable or an STP cable (coax/STP shown in the figure). For example, when the first detection apparatus 411 includes the first processor 4114, the serializer 4111 may receive, through the MIPI, the foregoing various types of feature information sent by the first processor 4114, and pack and send the feature information to the deserializer 422. For another example, when the first detection apparatus 411 does not include the first processor 4114, the MIPI may be directly connected to the first receiver 4113, and the first receiver 4113 may send all received first echo signals to the serializer 4111 through the MIPI. After the first echo signals are subsequently transmitted to the centralized processing unit 421 in the second detection apparatus 420, screening and feature extraction are jointly performed on the first echo signals. An interface type of the MIPI may be at least one of the following types: a camera serial interface 2 (camera serial interface 2, CSI-2), a display port (display port, DP), a high-definition multimedia interface (high-definition multimedia interface, HDMI), a display serial interface (display serial interface, DSI), an open lighting data interface (open lighting data interface, OLDI), a parameter (parameter, par) interface, and the like.

The GPIO interface, the I2C interface, the UART interface, the SPI, the I2S interface, and the Eth interface are control interfaces. These control interfaces are bidirectional interfaces, which can be used as transmit or receive interfaces. When the control interfaces are used as the transmit interfaces, the serializer 4111 may receive, through the coaxial cable or the STP cable, downlink configuration information sent by the deserializer 422. The downlink configuration information may include control information and a parameter, and the serializer 4111 may control, based on an indication manner of the configuration information through these control interfaces, other components in the first detection apparatus 411 to be in a corresponding operating manner, for example, control start time of emitting, an amount of emitted light, time for emitting each time, an interval between emitting, and the like of the first transmitter 4112; and for example, control start time of detection, detection units that are enabled when detection is performed each time, duration in which the detection units are enabled, and the like of the first receiver 4113. When the control interfaces are used as the receive interfaces, the serializer 4111 may receive, through these interfaces, information, related to an operating manner, sent by other components in the first detection apparatus 411, and may send the information to the deserializer 422 through the coaxial cable or the STP cable. In this way, the deserializer 422 adjusts the sent configuration information in time when an operating manner of the first detection apparatus 411 does not match the configuration information sent by the second detection apparatus 420, to drive the first detection apparatus 411 to operate accurately based on an indication of the second detection apparatus 420.

The Ref Clk interface is a clock interface and is a unidirectional transmit interface. The serializer 4111 may receive, through the coaxial cable or the STP cable, clock information sent by the deserializer 422, and may synchronize the clock information to another component in the first detection apparatus 411 through the Ref Clk interface, to maintain clock consistency between the component in the first detection apparatus 411 and a component in the second detection apparatus 420. The consistent clock may ensure that the first detection apparatus 411 and the second detection apparatus 420 operate under a same time standard.

The Sync interface is a synchronous interface and is also a unidirectional transmit interface. The serializer 4111 may receive, through the coaxial cable or the STP cable, downlink synchronization information sent by the deserializer 422, and may indicate a synchronization manner between the first detection apparatus 411 and the second detection apparatus 420 to another component in the first detection apparatus 411 through the Sync interface. The synchronization manner may be, for example, frame synchronization (Frame Sync) or slot synchronization (Slot Sync).

Further, optionally, refer to FIG. 6. The first detection apparatus 411 may further include a first power supply module 4115. An input end of the first power supply module 4115 is connected to the coaxial cable or the STP cable, and an output end of the first power supply module 4115 is connected to all local components (loads) of the first detection apparatus 411. The first power supply module 4115 may obtain a power supply signal from the second detection apparatus 420 through the coaxial cable or the STP cable, and may provide the power supply signal for all the local components in the first detection apparatus 411, to supply power to the first detection apparatus 411. When the control system 400 is integrated into a vehicle, the power supply signal may be, for example, a 12 V voltage signal.

It should be noted that, in addition to the foregoing various types of information, the coaxial cable or the STP cable may be further used to transmit other information, such as other radar information, video information, power supply information, camera information, display control and synchronization information, touch information, tactile information, clock information, audio information, software update, and a status report. The information may be simultaneously transmitted between the first detection apparatus and the second detection apparatus through the coaxial cable or the STP cable. In addition, a plurality of pieces of radar information can be simultaneously transmitted through one coaxial cable or STP cable.

Next, an interface circuit and another internal component in the second detection apparatus 420 are described.

Optionally, refer to FIG. 6. Similar to the first detection apparatus 411, in addition to the deserializer 422 and the centralized processing unit 421, the second detection apparatus 420 may further include one or more of a second transmitter 423, a second receiver 424, and a second processor 425. The second transmitter 423 may be configured to send a second detection signal to a second field of view corresponding to the second detection apparatus 420, for example, emit a plurality of laser beams. The second receiver 424 may be configured to receive a second echo signal reflected by a target in the second field of view, and may send the second echo signal to the second processor 425. The second processor 425 does not have the point cloud processing capability, but can perform single-transmit anti-interference screening on received second echo signals, and can perform feature analysis on a screened-out second echo signal, to extract features related to the point cloud from these second echo signals, and send these features to the centralized processing unit 421. Herein, for content related to single-transmit anti-interference screening and the feature analysis, refer to the foregoing description of the first processor 4114. Details are not described herein again.

Further, optionally, refer to FIG. 6. Similar to the first detection apparatus 411, the deserializer 422 may also have a plurality of interfaces, such as an MIPI, a GPIO interface, an I2C interface, a UART interface, an SPI, an I2S interface, and an Eth interface. The MIPI is a data interface, the interface is a unidirectional transmit interface, and an interface type may be a CSI-2, a DP, an OLDI, or the like. After the deserializer 422 receives the serial data from the first detection apparatus 411 through the coaxial cable or the STP cable, the deserializer 422 may convert the serial data into MIPI data (for example, the foregoing various types of feature information), and send the MIPI data to the centralized processing unit 421 through the MIPI. The GPIO interface, the I2C interface, the UART interface, the SPI, the I2S interface, and the Eth interface are control interfaces. The control interfaces are bidirectional interfaces. When used as a receive interface, the deserializer 422 may receive configuration information through these control interfaces, for example, may receive configuration information sent by the centralized processing unit 421, or another control unit in the second detection apparatus 420, or an external control unit, and may send the configuration information to the serializer 4111 in the first detection apparatus 411 through the coaxial cable or the STP cable, so that the serializer 4111 controls the operating manner of the first detection apparatus 411 based on the configuration information, for example, frame synchronization or slot synchronization is configured between the first detection apparatus 411 and the second detection apparatus 420. When used as a transmit interface, the deserializer 422 may receive, through the coaxial cable or the STP cable, information, related to the operating manner, sent by the serializer 4111 in the first detection apparatus 411, and may send the information to the centralized processing unit 421, or other control units in the second detection apparatus 420, or external control units through these control interfaces, so that these control units can adjust the previously sent configuration information in time when the operating manner of the first detection apparatus 411 does not match the configuration information.

Further, optionally, refer to FIG. 6. The deserializer 422 may further have a clock (clock, Clk) interface, the second detection apparatus 420 may further include an external crystal resonator (external crystal oscillator, XTAL) 426, and an output end of the XTAL 426 is connected to the Clk interface. The XTAL 426 may be configured to provide a stable clock signal. After receiving the clock signal through the Clk interface, the deserializer 422 may send the clock signal to the serializer 4111 in the first detection apparatus 411 through the coaxial cable or the STP cable, to maintain time consistency between the first detection apparatus 411 and the second detection apparatus 420.

Further, optionally, refer to FIG. 6. The second detection apparatus 420 may further include a second power supply module 427. An input end of the second power supply module 427 is connected to a power supply V_{BAT}, and an output end of the second power supply module 427 is connected to the coaxial cable or the STP cable. The second power supply module 427 may provide a power supply signal provided by the power supply V_{BAT} for all components in the second detection apparatus 420, and may further provide the power supply signal for the first power supply module 4115 in the first detection apparatus 411 through the coaxial cable or the STP cable, to supply power to the first detection apparatus 411 through a shared SerDes physical path.

The foregoing content describes in detail internal architectures of the at least one first detection apparatus 410 and the second detection apparatus 420, and the following describes layouts of the at least one first detection apparatus 410 and the second detection apparatus 420 in a terminal device.

Optionally, the at least one first detection apparatus 410 and the second detection apparatus 420 may be deployed at different positions. For example, the terminal device is a vehicle. Any first detection apparatus or the second detection apparatus 420 may be mounted at any one of the following positions: a vehicle roof, a vehicle front, a vehicle rear, a position near a vehicle lamp, a position near a vehicle door, a position near a side mirror, a position near a vehicle wheel, a front bumper, a rear bumper, a position inside a windshield, or the like. The vehicle lamp is an exterior lamp, for example, may include but is not limited to: a headlamp (also referred to as a headlight), a position lamp (also referred to as a clearance lamp, a width indicator lamp, or a side marker lamp), a fog lamp, a turn lamp, a license plate lamp, a reverse lamp, a brake lamp (also referred to as a stop lamp), an end-outline marker lamp, a parking lamp, a warning lamp, and the like.

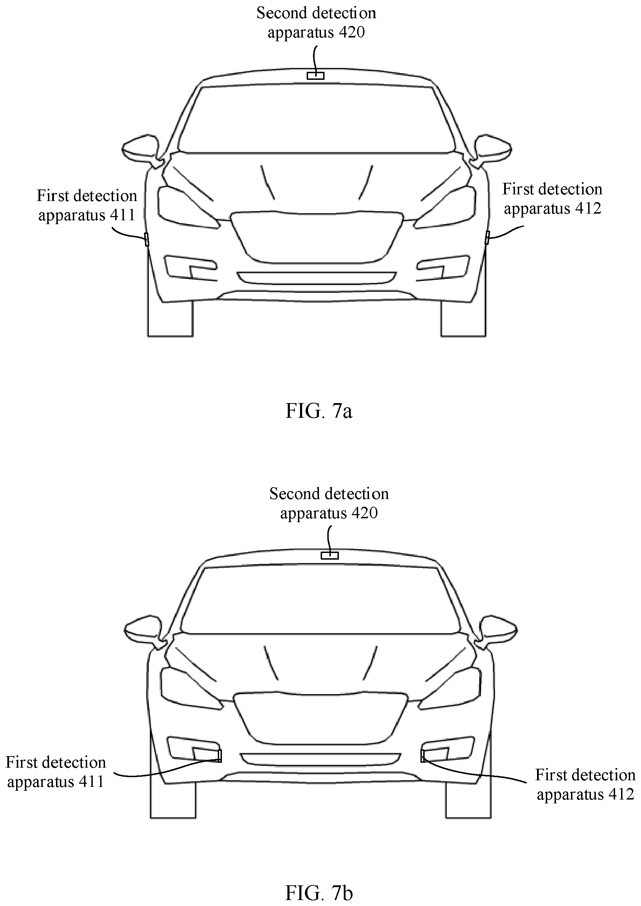

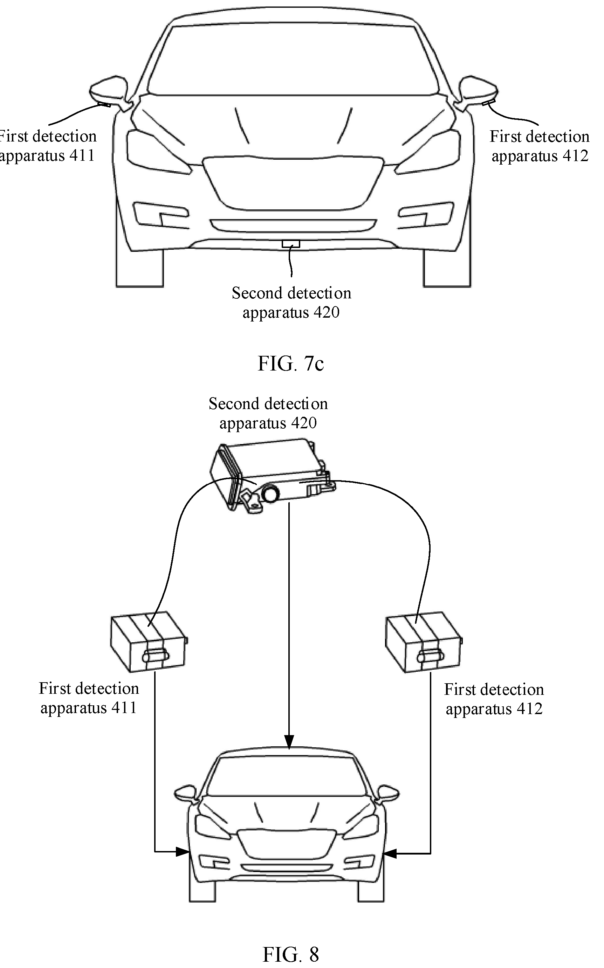

For example, FIG. 7a, FIG. 7b, and FIG. 7c are diagrams of three possible mounting positions of detection apparatuses according to this application. In the figure, two first detection apparatuses 411 and 412 are used as an example. In the example shown in FIG. 7a, the second detection apparatus 420 is mounted at a position on the vehicle roof and near the windshield, the first detection apparatus 411 is mounted between the right front wheel and the right front position lamp, and the first detection apparatus 412 is mounted between the left front wheel and the left front position lamp. In the example shown in FIG. 7b, the second detection apparatus 420 is mounted at the vehicle roof, the first detection apparatus 411 is mounted near the right front position lamp, and the first detection apparatus 412 is mounted near the left front position lamp. In the example shown in FIG. 7c, the second detection apparatus 420 is mounted on the front bumper, the first detection apparatus 411 is mounted below the right rear view lamp, and the first detection apparatus 412 is mounted below the left rear view lamp.

It may be understood that the detection apparatuses in FIG. 7a to FIG. 7c are merely examples, and actual appearance structures of the detection apparatuses are different from that in the figure. For example, FIG. 8 shows a partial exploded view of the vehicle shown in FIG. 7a. The first detection apparatus 411, the first detection apparatus 412, and the second detection apparatus 420 that are mounted on the vehicle, and connection lines of the first detection apparatus 411, the first detection apparatus 412, and the second detection apparatus 420 are separately exploded in the partial exploded view. In the figure, a line with an arrow indicates a mounting position of the detection apparatus, and a line without an arrow indicates a connection line between the detection apparatuses. As shown in FIG. 8, compared with the first detection apparatus 411 and the first detection apparatus 412, the centralized processing unit 421 is disposed in the second detection apparatus 420. Therefore, a size of the second detection apparatus 420 is slightly larger than that of the first detection apparatus 411 and the first detection apparatus 412.

Optionally, the at least one first detection apparatus 410 and the second detection apparatus 420 may be of a same type or different types. For example, the detection system 400 shown in FIG. 7a to FIG. 7c is used as an example. The first detection apparatus 411, the first detection apparatus 412, and the second detection apparatus 420 may all be lidars. Alternatively, the second detection apparatus 420 is a lidar, and the first detection apparatus 411 and the first detection apparatus 412 are millimeter-wave radars, for example, frequency-modulated continuous wave (frequency-modulated continuous wave, FMCW) radars. Alternatively, the second detection apparatus 420 is a lidar, the first detection apparatus 411 is an over-the-horizon radar, and the first detection apparatus 412 is a microwave radar. Alternatively, the second detection apparatus 420 is a mechanically scanned radar, the first detection apparatus 411 is a phased array radar, and the first detection apparatus 412 is a solid-state radar. Alternatively, the second detection apparatus 420 is a pulse radar, and the first detection apparatus 411 and the first detection apparatus 412 are continuous wave radars. Examples are not enumerated herein.

For example, a detection distance range of the at least one first detection apparatus 410 is different from a detection distance range of the second detection apparatus 420. For example, the lidar is used as an example. The at least one first detection apparatus 410 and the second detection apparatus 420 may be at least two of a long-range lidar, a medium-range lidar, and a short-range lidar. For example, the second detection apparatus 420 is the long-range lidar, and any one of the at least one first detection apparatus 410 may be the medium-range lidar or the short-range lidar. Alternatively, the second detection apparatus 420 is the medium-range lidar, and any one of the at least one first detection apparatus 410 may be the long-range lidar or the short-range lidar. Alternatively, the second detection apparatus 420 is the short-range lidar, and any one of the at least one first detection apparatus 410 may be the long-range lidar or the medium-range lidar. Based on this configuration, the at least one first detection apparatus 410 and the second detection apparatus 420 can be combined to detect targets in at least two distance ranges. A detection apparatus with a long detection distance range may be configured to perform range detection, and a detection apparatus with a short detection distance range may be configured to perform blind spot coverage. In this way, short-distance blind spot coverage can be performed during range detection.

It should be noted that, in some other possible examples, detection distance ranges of the at least one first detection apparatus 410 and the second detection apparatus 420 may be the same. For example, both the at least one first detection apparatus 410 and the second detection apparatus 420 are long-range lidars, medium-range lidars, or short-range lidars. Because mounting positions of the at least one first detection apparatus 410 and the second detection apparatus 420 are different, even if the detection distance ranges of these detection apparatuses are the same, targets in different directions can still be detected, and comprehensive multi-directional detection can be performed on the targets.

For example, a wavelength of the at least one first detection apparatus 410 is different from a wavelength of the second detection apparatus 420. For example, the at least one first detection apparatus 410 and the second detection apparatus 420 may select different wavelengths from an infrared band (from 760 nm to 1000 nm) as wave sending wavelengths. In this way, echo signals of the at least one first detection apparatus 410 and the second detection apparatus 420 can be more easily distinguished based on the wavelengths. This helps reduce an interference probability. In addition, the infrared band features high penetration and is less affected by sunlight, and this can improve measurement performance of the targets.

Optionally, it is considered that a wave with a short wavelength has better penetrability, a wavelength of a detection apparatus with a large detection distance range may be less than a wavelength of a detection apparatus with a small detection distance range. For example, the detection system 400 shown in FIG. 7a to FIG. 7c is used as an example. When the second detection apparatus 420 is configured as the long-range lidar and the first detection apparatuses 411 and 412 are configured as the medium-range lidars, 905 nm may be selected as the wavelength of the second detection apparatus 420. A laser beam of this wavelength has a small penetration light loss, can penetrate more objects, and can perform detection at a longer distance, and a detector of this wavelength has a low price. A wavelength greater than 905 nm, for example, 940 nm, may be selected as wavelengths of the first detection apparatuses 411 and 412, or 1550 nm may be selected as wavelengths of the first detection apparatuses 411 and 412. A laser of this wavelength is safer to human eyes.

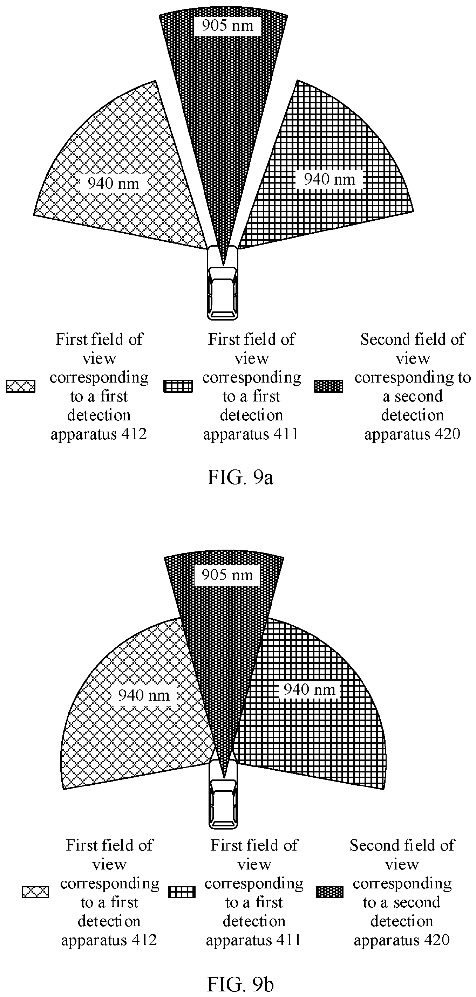

For example, a field of view range of the at least one first detection apparatus 410 is different from a field of view range of the second detection apparatus 420. In other words, the at least one first field of view is different from the second field of view. For example, the at least one first field of view and the second field of view at least partially do not overlap, for example, completely do not overlap, or partially do not overlap. For example, the mounting position of the detection apparatus shown in FIG. 7a is used as an example. FIG. 9a is a diagram of an overlapping relationship between fields of view of detection apparatuses according to this application. In the figure, an example in which the first detection apparatuses 411 and 412 use wavelengths of 940 nm and the second detection apparatus 420 uses a wavelength of 905 nm is used, and detection distance ranges of the first detection apparatuses 411 and 412 are less than the detection distance range of the second detection apparatus 420. In addition, a first field of view corresponding to the first detection apparatus 411, a first field of view corresponding to the first detection apparatus 412, and the second field of view corresponding to the second detection apparatus 420 do not overlap in a horizontal direction, that is, horizontal fields of view do not overlap. In this way, the first detection apparatus 411, the first detection apparatus 412, and the second detection apparatus 420 may be separately configured to detect targets in different directions, to implement independent multi-directional detection on the targets.

Optionally, to accurately detect the targets, the at least one first field of view and the second field of view may further at least partially overlap. For example, a part of any first field of view and a part of the second field of view overlap, or any first field of view completely coincides within the second field of view, or the second field of view completely coincides within any first field of view. For example, the mounting position of the detection apparatus shown in FIG. 7a is still used as an example. FIG. 9b is another diagram of an overlapping relationship between fields of view of detection apparatuses according to this application. In the figure, an example in which the first detection apparatuses 411 and 412 use wavelengths of 940 nm and the second detection apparatus 420 uses a wavelength of 905 nm is used, and the detection distance range of the second detection apparatus 420 is greater than detection distance ranges of the first detection apparatuses 411 and 412. In addition, first fields of view corresponding to the first detection apparatuses 411 and 412 and the second field of view corresponding to the second detection apparatus 420 partially overlap in a horizontal direction, that is, horizontal fields of view partially overlap. In view of this, a target in the overlapping area may be simultaneously detected by the first detection apparatuses 411 and 412 and the second detection apparatus 420, and the target can be recognized more accurately based on detection results of the three detection apparatuses for the same target.

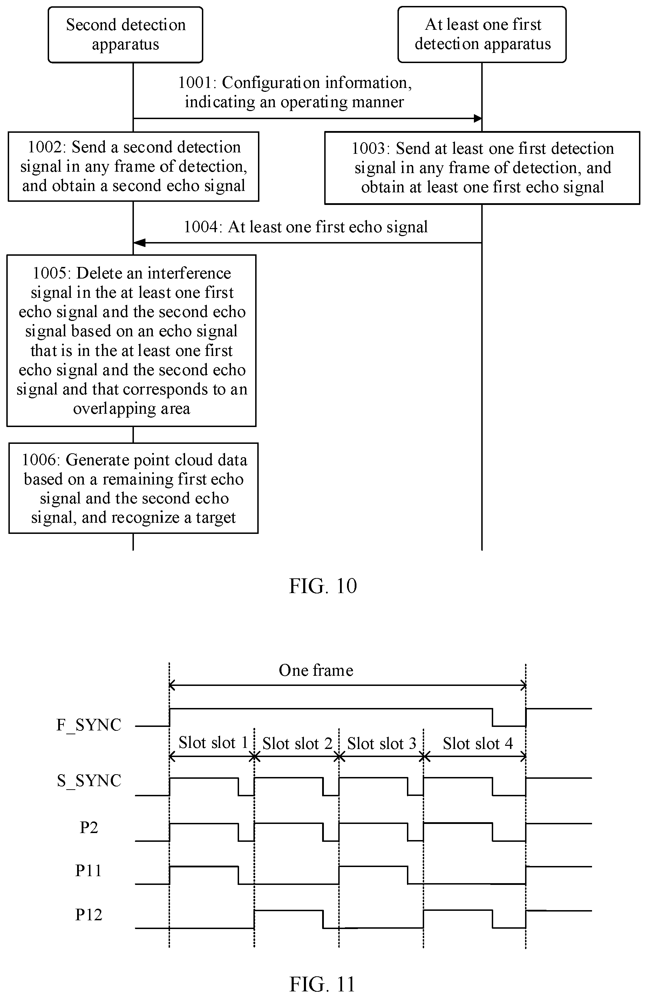

Further, optionally, when the at least one first field of view and the second field of view at least partially overlap, the second detection apparatus 420 and the at least one first detection apparatus 410 may further be combined to suppress interference and filter out noise. For example, FIG. 10 is an interaction flowchart of joint detection according to this application. A procedure may include the following steps.

Step 1001: A second detection apparatus sends configuration information to at least one first detection apparatus, where the configuration information indicates an operating manner of the at least one first detection apparatus.

Optionally, laser detection is used as an example. The configuration information sent by the second detection apparatus 420 to any first detection apparatus may include but is not limited to a specific slot (that is, an operating slot) in which the first detection apparatus operates in each frame of detection, a pulse repetition period of the slot (that is, period duration of the slot, and different slots may have same period duration), a total quantity of laser beams (that is, a quantity of shots) emitted in the pulse repetition period of the slot, a time at which each laser beam is emitted (that is, start time of emitting), duration for emitting each laser beam, a time before a detector is enabled after each laser beam is emitted, detection units that are enabled and that are at specific positions on the detector, and duration for enabling the detection units.

Further, optionally, in addition to sending the configuration information to the at least one first detection apparatus 410, the second detection apparatus 420 may further send clock information. The clock information is used to maintain consistency between the at least one first detection apparatus 410 and the second detection apparatus 420 in terms of time information. In this way, the at least one first detection apparatus 410 can perform emitting and detection based on the configuration information of the second detection apparatus 420 and the same time information, to implement detection synchronization, for example, frame synchronization, with the second detection apparatus 420.

Step 1002: The second detection apparatus sends a second detection signal in any frame of detection, and obtains a second echo signal.

Optionally, the second detection apparatus 420 may send the second detection signal in each slot in any frame of detection, for example, emit a plurality of laser beams in each slot. Emission time of an n^{th} laser beam in each slot may meet the following formula (1.1): ${t}_{n 1} = \left(n-1\right) \times T + Δt$ where
tₙ₁ is emission time of the n^{th} laser beam corresponding to the second detection apparatus 420; n is any positive integer less than a total amount of light emitted within one slot; T is a pulse repetition period of the slot, and is usually configured as several microseconds (microsecond, µs); and Δt is a known random sequence, and may be understood as a random disturbance. The second detection apparatus 420 randomly selects a disturbance before emitting each laser beam, to determine emission time of the laser beam. Δt ensures that no necessary rule is present between emission time of any two laser beams, thereby reducing a probability that the emitting rule is detected and is maliciously interfered.

According to the foregoing formula (1.1), it is assumed that the second detection apparatus 420 emits 10 laser beams in total within one slot, and a pulse repetition period of the slot is 5 µs. Emission time of the 10 laser beams is: Δt₁, 5+Δt₂, 10+Δt₃, 15+Δt₄, 20+Δt₅, 25+Δt₆, 30+Δt₇, 35+Δt₈, 40+Δt₉, and 45+Δt₁₀. Δt₁, Δt₂, ..., and Δt₁₀ are random disturbances corresponding to the 10 laser beams respectively. For example, with reference to FIG. 6, when Δt₁, Δt₂, ..., and Δt₁₀ within one slot are randomly selected as 0.1 µs, 0.2 µs, 0.15 µs, 0.1 µs, 0.25 µs, 0.2 µs, 0.1 µs, 0.15 µs, 0.25 µs, and 0.2 µs, the second detection apparatus 420 controls the second transmitter 423 to separately send a laser beam to a second field of view at 0.1 µs, 5.2 µs, 10.15 µs, 15.1 µs, 20.25 µs, 25.2 µs, 30.1 µs, 35.15 µs, 40.25 µs, and 45.2 µs in the slot, to detect a slot in the second field of view.

Further, optionally, with reference to FIG. 6, in each slot, the second receiver 424 may be immediately enabled each time the second detection apparatus 420 emits a laser beam. The second detection apparatus 420 may further pre-determine, based on the detection distance range of the second detection apparatus 420 or a field of view range of the second field of view, time required for reflecting a laser beam back to the second detection apparatus 420 by a target with a longest detection distance, which is referred to as flight time. After enabling the second receiver 424, the second detection apparatus 420 may disable the second receiver 424 after duration of the flight time. In this way, the second receiver 424 may receive, within the enabled time, a second echo signal reflected by a target in the second field of view, to detect each slot in the second field of view.

Step 1003: The at least one first detection apparatus sends at least one first detection signal in any frame of detection, and obtains at least one first echo signal.

Optionally, when only one first detection apparatus is included, the first detection apparatus may emit a first detection signal in each slot in any frame of detection. When a plurality of first detection apparatuses are included, the plurality of first detection apparatuses may send first detection signals in different slots in any frame of detection. For example, the detection system shown in FIG. 9b is used as an example. FIG. 11 is a diagram of emission time series of detection apparatuses according to this application. In the figure, P2 is an emission time series of the second detection apparatus 420, P11 is an emission time series of the first detection apparatus 411, and P12 is an emission time series of the first detection apparatus 412. It is assumed that a frame of detection includes 4 slots, that is, a slot 1, a slot 2, a slot 3, and a slot 4 shown in the figure. The second detection apparatus 420 may emit a laser beam in each of the slot 1 to the slot 4, and the first detection apparatus 411 and the first detection apparatus 412 may emit laser beams in the slot 1 to the slot 4 in an interleaved manner. For example, the first detection apparatus 411 emits laser beams in the slot 1 and the slot 3, and the second detection apparatus 420 emits laser beams in the slot 2 and the slot 4. Alternatively, the first detection apparatus 411 emits laser beams in the slot 2 and the slot 3, and the second detection apparatus 420 emits laser beams in the slot 1 and the slot 3. That the first detection apparatus 411 emits the laser beams in the slot 1 and the slot 3, and the second detection apparatus 420 emits the laser beams in the slot 2 and the slot 4 is used as an example in the figure.

It may be understood that, when laser beams emitted by the plurality of first detection apparatuses have a same wavelength, the plurality of first detection apparatuses are enabled to emit the laser beams in different slots, so that the laser beams of the plurality of first detection apparatuses may be separated in terms of time (also referred to as time division separation). In this way, even if the plurality of first detection apparatuses use the laser beams of the same wavelength, only one first detection apparatus emits a laser beam within one slot, and the plurality of first detection apparatuses do not simultaneously emit the laser beams, thereby avoiding crosstalk between the laser beams emitted by the different first detection apparatuses. In addition, because the second detection apparatus 420 performs emitting and detection in each slot, the second detection apparatus 420 and one first detection apparatus perform emitting and detection within one slot simultaneously, the laser beam emitted by the second detection apparatus 420 and a laser beam emitted by the first detection apparatus have different wavelengths, and a probability of mutual interference is low. Therefore, a detection result of the second detection apparatus 420 may be used as a reference for comparison with a detection result of the first detection apparatus that performs emitting in each slot, to jointly filter out noise in an overlapping area between the second detection apparatus 420 and the first detection apparatus that performs emitting in each slot.

It may be understood that when wavelengths of the laser beams emitted by the plurality of first detection apparatuses are different, crosstalk between the different first detection apparatuses is small. Therefore, the plurality of first detection apparatuses may also emit the laser beams in a same slot. In this way, the second detection apparatus and the plurality of first detection apparatuses may perform emitting and detection in each slot, and the second detection apparatus 420 and the plurality of first detection apparatuses may be combined to filter out the noise in the overlapping area in the slot.

Further, optionally, in any frame of detection, any first detection apparatus may emit a first detection signal in a corresponding slot, for example, emit a plurality of laser beams in the corresponding slot. Emission time of an n^{th} laser beam in each slot may meet the following formula (1.2): ${t}_{n 2} = \left(n-1\right) \times T + Δt + kT$ where
where tₙ₂ is emission time of an n^{th} laser beam corresponding to the first detection apparatus; T and Δt are consistent with those of the second detection apparatus 420; and k is a decimal greater than 0 and less than 1, and a value of k may be preconfigured in the first detection apparatus.

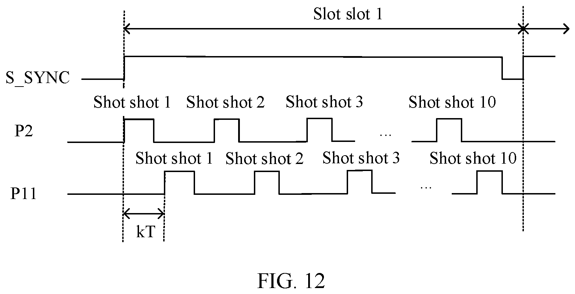

According to the foregoing formulas (1.1) and (1.2), FIG. 12 is a diagram of emission timing of a first detection apparatus and a second detection apparatus within one slot according to this application. The slot 1 in FIG. 11 is used as an example in the figure. As shown in FIG. 12, in the slot, the second detection apparatus 420 and the first detection apparatus that sends a first detection signal may emit a same quantity of laser beams (shown as 10 in the figure). A time at which the first detection apparatus emits the laser beams is later than a time at which the second detection apparatus 420 emits the laser beams, and may be specifically duration of kT later than the time at which the second detection apparatus 420 emits the laser beams. Because k is the decimal, duration of an interval is less than duration of a pulse repetition period. For example, it is assumed that a pulse repetition period of 1 slot is 5 µs, and the value of k is 0.4. The time at which the first detection apparatus emits the laser beams is 2 µs later than the time at which the second detection apparatus 420 emits the laser beams. For example, if the second detection apparatus 420 separately emits a laser beam at 0.1 µs, 5.2 µs, 10.15 µs, 15.1 µs, 20.25 µs, 25.2 µs, 30.1 µs, 35.15 µs, 40.25 µs, and 45.2 µs within one slot, the first detection apparatus separately emits a laser beam at 2.1 µs, 7.2 µs, 12.15 µs, 17.1 µs, 22.25 µs, 27.2 µs, 32.1 µs, 37.15 µs, 42.25 µs, and 47.2 µs in the slot. For example, with reference to FIG. 6 and FIG. 11, the first detection apparatus 411 may control the first transmitter 4112 to separately emit a laser beam to the corresponding first field of view at 0.1 µs, 5.2 µs, 10.15 µs, 15.1 µs, 20.25 µs, 25.2 µs, 30.1 µs, 35.15 µs, 40.25 µs, and 45.2 µs in the slot 1 and the slot 3, to detect the first field of view in the slot 1 and the slot 3.

Further, optionally, with reference to FIG. 6, the first detection apparatus 411 is used as an example. In a corresponding slot, each time the first detection apparatus 411 emits a laser beam, the first receiver 4113 may be immediately enabled. The first detection apparatus 411 may further pre-determine, based on the detection distance range of the first detection apparatus 411 or a field of view range of the first field of view, flight time required for reflecting a laser beam back to the first detection apparatus 411 by a target with a longest detection distance. After enabling the first receiver 4113, the first detection apparatus 411 may disable the first receiver 4113 after duration of the flight time. In this way, the first receiver 4113 may receive, within the enabled time, a first echo signal reflected by a target in the first field of view, to perform detection in the slot in the first field of view.

It may be understood that, compared with the second detection apparatus 420, the first detection apparatus delays emitting in a same slot. Therefore, return time of the first echo signal corresponding to the first detection apparatus and return time of the second echo signal corresponding to the second detection apparatus 420 can be staggered, and a time at which the first detection apparatus enables the first receiver and a time at which the second detection apparatus 420 enables the second receiver can also be staggered, so that both the first detection apparatus and the second detection apparatus 420 can receive their own echo signals in their own corresponding time, to reduce crosstalk between the first detection apparatus and the second detection apparatus 420 that operate simultaneously in the same slot.

Step 1004: The at least one first detection apparatus sends the at least one first echo signal to the second detection apparatus.

Optionally, with reference to FIG. 6, in any first detection apparatus, after receiving a plurality of returned beams corresponding to a plurality of laser beams, the first receiver may convert the plurality of returned beams into a plurality of electrical signals, and send the plurality of electrical signals to the first processor. The first processor may perform single-transmit anti-interference screening on the plurality of electrical signals, for example, select, from the plurality of electrical signals, three electrical signals with maximum power, fastest return time, and maximum light intensity, then perform feature extraction on the three electrical signals, and send the extracted feature information to a serializer through an MIPI. The serializer may convert the received feature information into a serial signal, and may send the serial signal to the deserializer 422 in the second detection apparatus 420 through a coaxial cable or an STP cable. The deserializer 422 obtains the feature information in the serial signal by parsing the serial signal, and may send the feature information to the centralized processing unit 421 through the MIPI.

Similarly, after receiving the plurality of returned beams corresponding to the plurality of laser beams, the second receiver 424 in the second detection apparatus 420 may convert the plurality of returned beams into a plurality of electrical signals, and send the plurality of electrical signals to the second processor 425. The second processor 425 may perform single-transmit anti-interference screening on the plurality of electrical signals, may perform feature extraction on one or more electrical signals that are screened out, and then may send extracted feature information to the centralized processing unit 421.

Step 1005: The second detection apparatus deletes an interference signal in the at least one first echo signal and the second echo signal based on an echo signal that is in the at least one first echo signal and the second echo signal and that corresponds to the overlapping area.

Optionally, after receiving feature information of a plurality of first echo signals and a plurality of second echo signals corresponding to any frame of detection, the centralized processing unit 421 may sequentially traverse each of the plurality of first echo signals and each of the plurality of second echo signals. When each first echo signal is traversed, a target position of the first echo signal (that is, a position of a target that reflects the first echo signal) is first determined based on feature information of the first echo signal. If the target position is located in an overlapping area between a first field of view and a second field of view corresponding to the first echo signal, the first echo signal may be used as a to-be-selected first echo signal, and the to-be-selected first echo signal and a second echo signal obtained through detection in the overlapping region are combined to subsequently determine an interference signal. If the target position is in a non-overlapping region, the first echo signal may be reserved, and directly participates in subsequent target recognition. Similarly, when each second echo signal is traversed, a target position of the second echo signal is first determined based on feature information of the second echo signal. If the target position is located in an overlapping area between a first field of view and a first field of view of a slot corresponding to the second echo signal, the second echo signal may be used as a to-be-selected second echo signal, and the to-be-selected second echo signal and a first echo signal obtained through detection in the overlapping area are combined to subsequently determine an interference signal. If the target position is located in a non-overlapping area, the second echo signal may be reserved, and directly participates in subsequent target recognition.

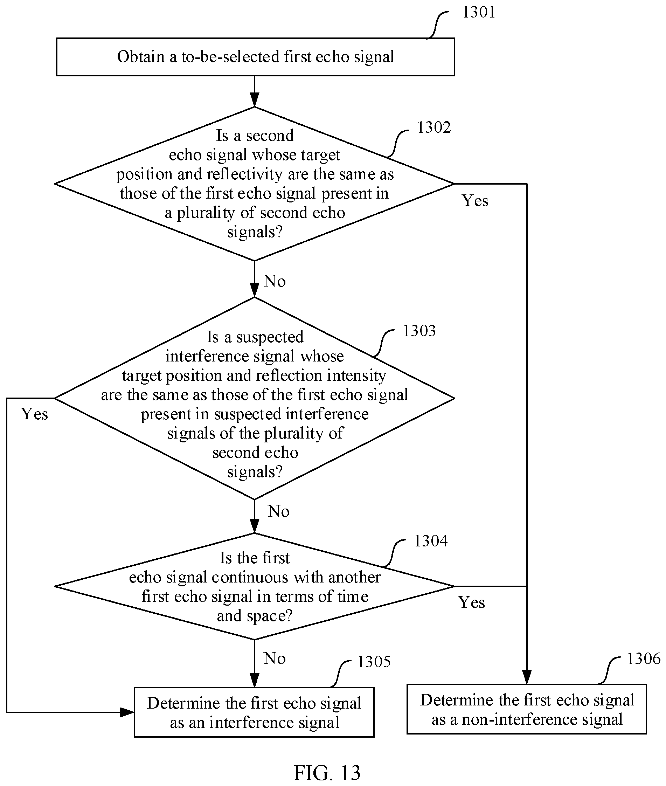

Further, optionally, determining the interference signal of the to-be-selected first echo signal is used as an example. FIG. 13 is a flowchart of determining an interference signal according to this application. The determining procedure may include the following steps.

Step 1301: A centralized processing unit obtains a to-be-selected first echo signal.

Step 1302: The centralized processing unit determines whether a second echo signal whose target position and reflectivity are the same as those of the first echo signal is present in a plurality of second echo signals; and if no, determines the first echo signal as a suspected interference signal, and performs step 1303; or if yes, performs step 1306.

Optionally, the centralized processing unit 421 may first determine, based on the feature information of the to-be-selected first echo signal, a position and reflectivity that are of a target that reflects the first echo signal (that is, a proportion of energy that can be returned in a point cloud after the target is scanned by a beam), convert the target to a detection scenario corresponding to the second detection apparatus 420, predict a corresponding position and reflectivity if the target is detected by the second detection apparatus 420, and compare the corresponding position and reflectivity with target positions and target reflectivity of a plurality of to-be-selected second echo signals. If there is at least one second echo signal whose target position is exactly the same as the corresponding position, and reflectivity of the at least one second echo signal is exactly the same as the corresponding reflectivity, it indicates that such a target is indeed present in the overlapping area, and the first echo signal is an echo signal reflected by the target instead of the interference signal. On the contrary, if the target positions of all the second echo signals are different from the corresponding position, and/or the target reflectivity of all the second echo signals is different from the corresponding reflectivity, it indicates that the first echo signal may not be the echo signal reflected by the target, and further analysis needs to be performed. In this case, the first echo signal may be marked as the suspected interference signal, and the following step 1033 may be performed.

It should be noted that, "same positions" or "same reflectivity" in the foregoing content does not mean same in a strict sense, and may have a specific technical error. For example, when two positions are not completely the same but are within a set deviation distance, it may also be considered that the two positions are the same. Alternatively, when two pieces of reflectivity are not completely the same but are within a set deviation range, it may also be considered that the two pieces of reflectivity are the same.

Step 1303: The centralized processing unit determines whether a suspected interference signal whose target position and reflection intensity are the same as those of the first echo signal is present in the suspected interference signals of the plurality of second echo signals; and if no, performs step 1304; or if yes, performs step 1305.

The suspected interference signal of the second echo signal is a second echo signal that is in the plurality of second echo signals and that has a different target position and/or different reflectivity from the first echo signal.

Optionally, the centralized processing unit 421 may analyze each of the plurality of second echo signals in the manner in the foregoing step 1302, to determine a non-interference signal and a suspected interference signal (referred to as a second suspected interference signal) in the plurality of second echo signals, and analyze each of the plurality of first echo signals, to determine a non-interference signal and a suspected interference signal (referred to as a first suspected interference signal) in the plurality of first echo signals. Then, for any first echo signal determined as the first suspected interference signal, a position and reflection intensity of a target that reflects the first echo signal are first determined, and the target is converted to the detection scenario corresponding to the second detection apparatus 420. If the target is determined as noise, a corresponding position and reflection intensity are determined when the noise is detected by the second detection apparatus 420 within corresponding time. For example, when the first echo signal is an echo signal corresponding to a second detection signal sent by the second detection apparatus 420, the first echo signal corresponds to a target position and reflection intensity in the second echo signal that should be received by the second detection apparatus 420. Then, the centralized processing unit 421 may compare a corresponding position and reflection intensity range with target positions and reflection intensity of a plurality of second suspected interference signals. If at least one second suspected interference signal whose target position is exactly the same as the corresponding position, and target reflection intensity of the at least one second suspected interference signal is exactly the same as the corresponding reflection intensity, it indicates that the first echo signal is indeed an echo signal corresponding to the noise, and the first echo signal is the interference signal. On the contrary, if the target positions of all the second suspected interference signals are different from the corresponding position, and/or the target reflection intensity of all the second suspected interference signals is different from the corresponding reflection intensity, it indicates that the first echo signal may not be the echo signal corresponding to the noise, and further analysis needs to be performed. In this case, the following step 1304 may be performed.

It should be noted that, "same reflection intensity" in the foregoing content does not mean same in a strict sense, and may have a specific technical error. For example, when two pieces of reflection intensity are not completely the same but are within a set deviation range, it may also be considered that the two pieces of reflection intensity are the same.

Step 1304: The centralized processing unit determines whether the first echo signal is continuous with another first echo signal in terms of time and space; and if not, performs step 1305; or if yes, performs step 1306.

Optionally, spatial continuity may be understood as continuity, on different pixels, of the first echo signal and another first echo signal obtained through a same frame of detection. Specifically, the centralized processing unit 421 may first determine a slot in which the first echo signal is obtained through detection; obtain first echo signals in one or more slots adjacent to the slot in the same frame of detection, for example, first echo signals in a previous slot or several previous slots and first echo signals in a next slot or several next slots; and analyze whether the first echo signal in the current slot and the first echo signals in the one or more adjacent slots are continuous in terms of pixel features, for example, whether light intensity of a pixel corresponding to the first echo signal and light intensity of a neighboring pixel change gradually rather than suddenly, and whether a target position of the pixel corresponding to the first echo signal and a target position of the neighboring pixel change gradually rather than suddenly. If the pixel corresponding to the first echo signal is obviously isolated from the neighboring pixel in terms of features, it indicates that the first echo signal is not an echo signal reflected by the target in the current slot, but is highly likely stray light transmitted from another position. In this case, it may be determined that the first echo signal is the interference signal. On the contrary, if the pixel corresponding to the first echo signal and the neighboring pixel are continuous in terms of features, it indicates that the first echo signal is the echo signal reflected by the target at the current slot, and the first echo signal and the neighboring first echo signal are continuous in terms of space, and further determining needs to be performed by combining temporal continuity.

Optionally, the temporal continuity may be understood as continuity, on a same pixel, of the first echo signal and other first echo signals obtained through different frames of detection. Specifically, the centralized processing unit 421 may first determine a slot in which the first echo signal is obtained through detection; obtain one or more first echo signals obtained through detection in a same slot in the different frames of detection, for example, first echo signals in a same slot in a previous frame of detection or several previous frames of detection and first echo signals in a same slot in a next frame of detection or several next frames of detection; and analyze whether a first echo signal in a current frame and first echo signals in one or more adjacent frames are continuous in terms of pixel features, for example, whether a pixel feature corresponding to the first echo signal in the current frame and a pixel feature corresponding to the first echo signal in the adjacent frame change gradually rather than suddenly. If the pixel feature corresponding to the first echo signal in the current frame is isolated from the pixel feature corresponding to the first echo signal in the adjacent frame, it indicates that the first echo signal is not an echo signal reflected by a target in a slot in the current frame, but is highly likely stray light transmitted from another position. In this case, it may be determined that the first echo signal is the interference signal. On the contrary, if the pixel feature corresponding to the first echo signal in the current frame and the pixel feature corresponding to the first echo signal in the adjacent frame are continuous, it indicates that the first echo signal is the echo signal reflected by the target in the slot in the current frame. The first echo signal and the first echo signal in the adjacent frame are continuous in terms of time, and further determining may be performed by combining spatial continuity.

Step 1305: The centralized processing unit determines the first echo signal as the interference signal.

Step 1306: The centralized processing unit determines the first echo signal as the non-interference signal.

Optionally, when the first echo signal is spatially continuous with first echo signals in adjacent slots in a same frame of detection, and the first echo signal is also temporally continuous with first echo signals in same slots in different frames of detection, the centralized processing unit 421 may determine the first echo signal as the non-interference signal; otherwise, determine the first echo signal as the interference signal.

Based on the foregoing interference signal determining procedure, when an echo signal is determined as the interference signal or the non-interference signal, three determining procedures of target determining, noise determining, and continuity determining in the overlapping area are sequentially performed. In the first two determining procedures, a target position, reflectivity, and reflection intensity of an echo signal received by another detection apparatus that operates jointly in a same slot are used, and in the next determining procedure, echo signals obtained through detection by a current detection apparatus in a same frame and different frames are used. In the determining procedure, the interference signal and the non-interference signal are determined comprehensively based on a plurality of types of information, so that the noise signal in the first echo signal and the second echo signal can be recognized more accurately.

Further, optionally, each time the centralized processing unit 421 determines one first echo signal (or one second echo signal) as the interference signal, the first echo signal may be deleted, and noise is filtered out in a timely manner, thereby suppressing interference.

Step 1006: The second detection apparatus generates point cloud data based on a remaining first echo signal and the second echo signal, and recognizes the target.

Optionally, the centralized processing unit 421 may further process a feature of the reserved first echo signal and a feature of the reserved second echo signal, for example, may determine respective corresponding return time based on a time at which the first detection signal is sent, a time at which the reserved first echo signal is received, a time at which the second detection signal is sent, and a time at which the reserved second echo signal is received; may measure distance information of the target based on information such as a speed of light and the return time; obtain orientation information (for example, three-dimensional coordinates and a posture) of the target through calculation based on information from an inertial measurement unit (inertial measurement unit, IMU), an odometer, a global navigation satellite system (global navigation satellite system, GNSS), and the like; and associate the distance information with the orientation information, to generate three-dimensional point cloud data.

Further, optionally, in addition to the distance information and the orientation information of the target, the three-dimensional point cloud data may further include other information of the target, for example, information such as reflection intensity and reflectivity. The reflection intensity refers to intensity of a laser beam reflected back by the target, and is related to a surface material and roughness of the target, an incident angle of the laser beam, a wavelength of the laser beam, and energy density of a radar. The reflectivity refers to a proportion of the laser beam reflected by the target. Higher reflectivity indicates more returned energy and a longer detection distance of the radar.

It should be understood that the three-dimensional point cloud data may further include other information. This is not specifically limited in this application.

In the foregoing detection system, communication between a central detection unit (that is, the second detection apparatus) and a remote detection unit (that is, the at least one first detection apparatus) is implemented via a SerDes, so that performance of high-speed SerDes serial transmission and low-loss SerDes transmission can be used to improve a speed of transmitting the echo signal from the remote detection unit to the central detection unit, and reduce a transmission loss of the echo signal, thereby reducing power consumption of the detection system. In addition, the centralized processing unit is integrated in the central detection unit to process the echo signals of the central detection unit and the remote detection unit together. In this way, it is unnecessary to dispose processing units in all detection units, or connect an external processing unit through an optical fiber. This can further reduce the power consumption and costs.

Based on the structure and function principles of the receiving system described above, this application may further provide a terminal device. The terminal device may include the detection system in any one of the foregoing embodiments.

For example, the terminal device may be a transportation means (such as a car, a truck, a motorcycle, a bus, a ship, an airplane, a helicopter, a recreational vehicle, an amusement park vehicle, a construction vehicle, an electric vehicle, a golf cart, a train, an unmanned vehicle, a smart vehicle, or a digital vehicle), a robot, a surveying and mapping device, a smart home device (such as a television, a robotic vacuum cleaner, a smart desk lamp, a sound system, a smart lighting system, an electric appliance control system, home background music, a home theater system, an intercom system, or video surveillance), a smart manufacturing device (such as an industrial device or a lawn mower), a smart transportation device (such as an AGV, an unmanned transport vehicle, or a lorry), or a smart terminal (such as a mobile phone, a computer, a tablet computer, a palmtop computer, a desktop computer, a headset, a sound box, a wearable device, an on-board device, a virtual reality device, or an augmented reality device).

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and "c", or "a, b, and c", where a, b, and c may be singular or plural. In addition, in this application, the terms "for example" and "optionally" are used to represent giving an example, an illustration, or a description. Any embodiment or design solution described as an "example" or "optional" in this application shall not be construed as being more preferred or more advantageous than another embodiment or design solution. Alternatively, it may be understood as that the word "example" or "optional" is used to present a concept in a specific manner, and does not constitute a limitation on this application.

It may be understood that, in this application, various numeric numbers are distinguished merely for ease of description and are not used to limit the scope of embodiments of this application. The sequence numbers of the foregoing processes do not mean execution sequences, and the execution sequences of the processes should be determined based on functions and internal logic of the processes. The terms "first", "second", and the like are used to distinguish between similar objects without having to describe a specific order or sequence. In addition, the terms "include", "comprise", and any variant thereof are intended to cover non-exclusive inclusion, for example, inclusion of a series of steps or units. A method, a system, a product, or a device is not necessarily limited to clearly listed steps or units, but may include other steps or units that are not clearly listed and that are inherent to the process, the method, the product, or the device.

## Claims

1. A detection system, comprising at least one first detection apparatus and a second detection apparatus, wherein the at least one first detection apparatus communicates with the second detection apparatus via a serializer/deserializer SerDes, and the second detection apparatus comprises a centralized processing unit;
the at least one first detection apparatus is configured to: detect at least one first field of view to obtain at least one first echo signal, and send the at least one first echo signal to the second detection apparatus via the SerDes; and
the second detection apparatus is configured to detect a second field of view to obtain a second echo signal, and the centralized processing unit recognizes a target based on the first echo signal and the second echo signal.

2. The detection system according to claim 1, wherein the second detection apparatus is disposed on a vehicle roof, and the at least one first detection apparatus is disposed near a vehicle lamp; or the second detection apparatus is disposed on a front bumper, and the at least one first detection apparatus is disposed below a side mirror.

3. The detection system according to claim 1 or 2, wherein the second detection apparatus is disposed at a position at the vehicle roof and near a windshield, the detection system comprises two first detection apparatuses, one first detection apparatus is disposed between a left front vehicle lamp and a left vehicle wheel, and the other first detection apparatus is disposed between a right front vehicle lamp and a right vehicle wheel.

4. The detection system according to claim 1, wherein a serializer is disposed in the first detection apparatus, at least one deserializer is disposed in the at least one second detection apparatus, and the serializer is connected to the at least one deserializer through a coaxial cable or a shielded twisted pair cable.

5. The detection system according to any one of claims 1 to 4, wherein the SerDes is a gigabit multimedia serial link GMSL.

6. The detection system according to any one of claims 1 to 5, wherein the second detection apparatus is further configured to send at least one of the following information items to any first detection apparatus via the SerDes:
configuration information, used to configure at least one of the following of the first detection apparatus: an emission manner, an emission time, a detection manner, or a detection time;
synchronization information, indicating frame synchronization or slot synchronization between the first detection apparatus and the second detection apparatus; and
clock information, used to maintain time consistency between the first detection apparatus and the second detection apparatus.

7. The detection system according to any one of claims 1 to 6, wherein the second detection apparatus is further configured to supply power to the at least one first detection apparatus via the SerDes.

8. The detection system according to any one of claims 1 to 7, wherein at least one of the following configurations of the at least one first detection apparatus and the second detection apparatus is different: a detection distance range, a wavelength, and a field of view range.

9. The detection system according to any one of claims 1 to 8, wherein the second detection apparatus is a long-range radar, and the at least one first detection apparatus is a medium-range radar or a short-range radar; or the second detection apparatus is a medium-range radar, and the at least one first detection apparatus is a long-range radar or a short-range radar; or the second detection apparatus is a short-range radar, and the at least one first detection apparatus is a long-range radar or a medium-range radar.

10. The detection system according to any one of claims 1 to 9, wherein the centralized processing unit is further configured to generate point cloud data.

11. The detection system according to any one of claims 1 to 10, wherein the second detection apparatus communicates with a domain controller through an Ethernet.

12. The detection system according to any one of claims 1 to 11, wherein the second detection apparatus sends a detection signal in each slot, and a plurality of first detection apparatuses send detection signals in different slots.

13. The detection system according to claim 12, wherein within one slot, the second detection apparatus and the first detection apparatus that sends the detection signal send same quantities of detection signals, and a time at which the first detection apparatus sends the detection signal is later than a time at which the second detection apparatus sends the detection signal.

14. The detection system according to any one of claims 1 to 13, wherein the at least one first field of view and the second field of view at least partially overlap.

15. The detection system according to claim 14, wherein before recognizing the target, the second detection apparatus is further configured to:
delete an interference signal in the at least one first echo signal and the second echo signal based on an echo signal that is in the at least one first echo signal and the second echo signal and that corresponds to an overlapping area.

16. A terminal device, comprising the detection system according to any one of claims 1 to 15.
